Europäisches Patentamt

European Patent Office

Office européen des brevets

(19)

(11) Veröffentlichungsnummer : **0 497 994 B1**

(12) ## EUROPÄISCHE PATENTSCHRIFT

(45) Veröffentlichungstag der Patentschrift :
**12.04.95 Patentblatt 95/15**

(51) Int. Cl.⁶ : **G01N 27/416,** G01R 27/02

(21) Anmeldenummer : **91101050.2**

(22) Anmeldetag : **28.01.91**

(54) **Verfahren und Schaltungsanordnung zur Überwachung von ionen- oder redoxpotential-sensitiven Messketten.**

(43) Veröffentlichungstag der Anmeldung :
**12.08.92 Patentblatt 92/33**

(45) Bekanntmachung des Hinweises auf die
Patenterteilung :
**12.04.95 Patentblatt 95/15**

(84) Benannte Vertragsstaaten :
**DE**

(56) Entgegenhaltungen :
**EP-A- 0 065 675**
**EP-A- 0 241 601**
**EP-A- 0 321 963**
**DE-A- 3 239 572**

(56) Entgegenhaltungen :
**DE-A- 4 001 274**
**PATENT ABSTRACTS OF JAPAN vol. 11, no. 2**
**(P-532)(2449) 06 Januar 1987, & JP-A-61**
**181951**

(73) Patentinhaber : **KNICK ELEKTRONISCHE**
**MESSGERÄTE GMBH & CO.**
**Beuckestrasse 22**
**D-14163 Berlin (DE)**

(72) Erfinder : **Martell, Thomas**
**Hubertusbader Strasse 30**
**W-1000 Berlin 33 (DE)**

(74) Vertreter : **Knoblauch, Andreas, Dr.-Ing. et al**
**Kühhornshofweg 10**
**D-60320 Frankfurt (DE)**

**Beschreibung**

Die Erfindung betrifft ein Verfahren zur Überwachung von ionen- oder redoxpotential-sensitiven Meßketten mit mindestens zwei Elektroden, die über eine Leitungsverbindung mit einer Auswerteeinrichtung verbunden sind, bei dem als Testspannung eine sich zeitlich ändernde Spannung über die Leitungsverbindung in die Meßkette eingespeist wird und eine Schaltungsanordnung zur Überwachung von ionen- oder redoxpotential-sensitiven Meßketten, die mindestens zwei Elektroden aufweisen, mit einer Auswerteeinrichtung, die über eine Leitungsverbindung mit der Meßkette verbunden ist, und einer Testspannungsquelle.

Ein derartiges Verfahren und eine derartige Schaltungsanordnung sind aus EP-A-241 601 bekannt.

Ferner offenbart das Dokument DE-A-3239572 ein Verfahren und eine Schaltungsanordnung gemäß dem Oberbegriff der unabhängigen Ansprüche.

Handelsübliche ionen- oder redoxpotential-sensitive Meßketten bestehen in der Regel aus einer sehr hochohmigen Meßelektrode, die beispielsweise bei einer pH-Meßkette als Glasmembranelektrode ausgeführt ist, und einer relativ dazu niederohmigen Bezugselektrode. Die elektrische Spannung zwischen diesen beiden Elektroden, d.h. der Potentialunterschied, ist ein direktes Maß für die Ionenkonzentration, also beispielsweise den pH-Wert, oder das Redoxpotential in einem wässrigen Elektrolyten.

Bei einem Defekt der Meßkette oder eines Teiles davon können Meßspannungen entstehen, die falsche, jedoch plausible Meßwerte vortäuschen. Bei einem Defekt, besonders bei einem mechanischen Defekt, der Elektroden ändert sich deren Innenwiderstand, so daß eine Überwachung der Meßkette durch eine Messung dieses Widerstandes möglich ist. Dabei darf die eigentliche Messung nicht gestört werden. Da das Meßsignal eine Spannung ist, die sich nur sehr langsam ändert, wird als Testspannung in der Regel eine Wechselspannung verwendet, die eine Frequenz von einigen Hertz hat. Nachteilig dabei ist jedoch der stark verfälschende Einfluß der Leitungsverbindung, also des Kabels, mit dem die Meßkette mit der Auswerteeinrichtung verbunden ist. Dieses Kabel bildet eine Parallelkapazität zu dem (ohmschen) Innenwiderstand der Meßkette. Der Scheinwiderstand dieser Kapazität kann beispielsweise bei einem 10 m langen Kabel und den verwendeten Meßfrequenzen in derselben Größenordnung liegen wie der zu bestimmende Elektrodenwiderstand.

In EP-A-241 601 ist deswegen vorgeschlagen worden, zwischen einer Meßschaltung und einer Testschaltung hin- und herzuschalten, um periodisch die Unversehrtheit der jeweiligen Meßketten zu überprüfen. Dieses Verfahren hat jedoch den Nachteil, daß dazu die eigentliche Messung unterbrochen werden muß. Aufgrund der großen Kapazität müssen die Pausen groß genug gewählt werden, um die im wesentlichen durch die Leitungskapazität bestimmte Zeitkonstante ausreichend zu berücksichtigen.

In DE-A-40 01 274 ist ein Verfahren vorgeschlagen worden, um die Pausenzeiten zu verkürzen. In beiden Verfahren ist es jedoch nach wie vor erforderlich, die Messung zu unterbrechen.

Der Erfindung liegt die Aufgabe zugrunde, ein Verfahren und eine Schaltung anzugeben, bei denen eine kontinuierliche Ionen- oder Redoxpotential-Messung und gleichzeitig eine Überwachung der Meßketten möglich ist.

Diese Aufgabe wird bei einem Verfahren der eingangs genannten Art dadurch gelöst, daß die Vorimpedanz komplex ist und daß aus einer Beziehung zwischen Ausgangsspannung und Testspannung im Phasenbereich und/oder Frequenzbereich ein nicht-phasenändernder beziehungsweise frequenzunabhängiger Anteil der aus Meßkette, Leitungsverbindung und Vorwiderstand gebildeten Gesamtimpedanz ermittelt wird.

Bei dem erfindungsgemäßen Verfahren wird also zunächst ein Spannungsteiler aufgebaut, der aus der komplexen Vorimpedanz einerseits und der Parallelschaltung aus Meßketteninnenwiderstand und Kapazität der Leitungsverbindung, d.h. der Kabelkapazität, gebildet ist. In diesen Spannungsteiler wird nun eine Testspannung eingespeist. Da der Spannungsteiler komplex ist, also Elemente aufweist, die einerseits die Phasenlage der Ausgangsspannung gegenüber der Eingangsspannung verändern und andererseits auch ein frequenzabhängiges Durchlaßverhalten zeigt, ist es möglich einerseits durch Beobachtung der Phasenlage der Ausgangsspannung in bezug auf die Eingangsspannung, andererseits aber auch durch Vergleich von verschiedenen Frequenzen oder gegebenenfalls durch beides auf die jeweiligen Parameter des Spannungsteilers zurückzuschließen, also auf einen Anteil, der zur Phasendrehung beiträgt, und einen Anteil, der nicht zur Phasendrehung beiträgt, beziehungsweise einen Anteil der Impedanz, der frequenzabhängig wirkt, und einen Anteil, der frequenzunabhängig wirkt. Allgemein ist dabei davon auszugehen, daß der Innenwiderstand der Meßkette ein rein ohmscher Widerstand ist. Ein ohmscher Widerstand verursacht aber keine Phasenverschiebung und ist auch frequenzunabhängig, so daß durch die Ermittlung dieses Anteils eine zuverlässige Aussage über den ohmschen Innenwiderstand der Meßkette getroffen werden kann. Wenn dieser Innenwiderstand festgelegte Grenzen über- oder unterschreitet, ist dies ein Zeichen dafür, daß in einer der Elektroden, die die Meßkette bilden, ein Fehler aufgetreten ist.

In einer bevorzugten Ausführungsform des Verfahrens ist die Testspannung als Wechselspannung ausgebildet. Eine Wechselspannung ändert sich periodisch. Bei einer Wechselspannung läßt sich relativ leicht die Phasenlage der Ausgangsspannung in bezug auf die Testspannung ermitteln. Aus der Phasenlage einerseits und dem Verhältnis der Beträge oder Amplituden von Ausgangsspannung und Testspannung andererseits läßt sich eine Aussage über den nicht-phasenändernden Anteil der Gesamtimpedanz treffen.

Bei einer weiteren bevorzugten Ausführungsform weist die Testspannung einen definierten Oberwellengehalt auf. Mit dem definierten Oberwellengehalt läßt sich beispielsweise die Frequenzabhängigkeit der Gesamtimpedanz darstellen. Man benötigt praktisch nur das Verhältnis zwischen Ausgangsspannung und Testspannung bei zwei verschiedenen Frequenzen. Hieraus läßt sich dann ein frequenzabhängiger und ein frequenzunabhängiger Anteil der Gesamtimpedanz ermitteln. Der frequenzunabhängige Anteil entspricht dem ohmschen Innenwiderstand der Meßkette.

Bei beiden bevorzugten Ausführungsformen ist es von Vorteil, daß die Testspannung als Rechteck-Wechselspanung ausgebildet ist. Eine Rechteck-Wechselspannung läßt sich sehr leicht erzeugen, indem eine Gleichspannung durch Schalter zerhackt wird. Eine Rechteck-Wechselspannung weist einen klar definierten Oberwellengehalt auf, der bekannt ist.

In einer weiteren bevorzugten Ausführungsform werden Realteil (Re) und Imaginärteil (Im) der Ausgangsspannung ($U_a$) ermittelt, und der ohmsche Anteil R der Gesamtimpedanz wird nach folgender Beziehung ermittelt:

$$R = k \cdot \text{Im}(U_a) \left( \frac{(\text{Re}(U_a))^2}{(\text{Im}(U_a))^2} + 1 \right)$$

mit $k = 1/(U_e \cdot Z_V)$, wobei Ue der Betrag der Testspannung und $Z_V$ die Impedanz der komplexen Vorimpedanz ist. Der Betrag der Testspannung und die Impedanz der komplexen Vorimpedanz sind bekannt. Die Berechnung des ohmschen Anteils der Gesamtimpedanz, d.h. des Innenwiderstandes der Meßkette, läßt sich leicht in einer dafür vorgesehenen Berechnungseinrichtung, beispielsweise einem Mikroprozessor, durchführen.

Bevorzugterweise werden Realteil und Imaginärteil der Ausgangsspannung durch eine phasenempfindliche Gleichrichtung ermittelt, die in bezug auf die Testspannung synchronisiert ist. Eine phasenempfindliche Gleichrichtung ist bekannt. Durch die Synchronisierung auf die Testspannung läßt sich der Betrag des Realteils ermitteln. Durch die Synchronisierung auf eine um gegenüber der Testspannung um 90° elektrisch versetzte Spannung läßt sich der Betrag des Imaginärteils ermitteln. Beides läßt sich mit einem relativ geringen Schaltungsaufwand realisieren.

Ferner ist von Vorteil, daß die Ausgangsspannung in eine Meßspannung und eine von der Testspannung verursachte Spannung zerlegt wird. Damit läßt sich die eigentliche Messung mit der Meßkette durchführen, ohne daß die Ermittlung des Innenwiderstandes gestört wird und umgekehrt.

Die Aufgabe wird auch bei einer Schaltungsanordnung der eingangs genannten Art gelöst, bei der die Vorimpedanz komplex ist, wobei Auswertemittel vorgesehen sind, die die Beträge von vorbestimmten Phasenlagen in bezug zur Testspannung oder Frequenzanteilen einer am Knotenpunkt zwischen Vorimpedanz und Leitungsverbindung abgegriffenen Ausgangsspannung ermittelt. Ferner ist eine Recheneinrichtung vorgesehen, die aus diesen Beträgen, den Phasenlagen beziehungsweise den Frequenzanteilen und der Testspannung einen nicht-phasenverändernden beziehungsweise frequenzunabhängigen Anteil der aus Vorimpedanz, Leitungsverbindung und Meßkette gebildeten Gesamtimpedanz errechnet.

Die Schaltungsanordnung weist also einen komplexen Spannungsteiler auf, an dessen Abgriff eine Ausgangsspannung abgegriffen werden kann. Aus der Beziehung zwischen Ausgangsspannung und Testspannung läßt sich der ohmsche Widerstand der Gesamtimpedanz, d.h. des Spannungsteilers, ermitteln. Dieser ohmsche Widerstand wird aber praktisch ausschließlich durch den Innenwiderstand der Meßkette, d.h. den Innenwiderstand der hochohmigsten Elektrode der Meßkette, bestimmt. Der ohmsche Widerstand hat die Eigenschaft, daß er keine Phasenverschiebung bewirkt beziehungsweise sein Widerstandswert frequenzunabhängig ist. Aus einer Betrachtung der Ausgangsspannung im Phasenbereich oder im Frequenzbereich läßt sich daher mit einfachen Mitteln dieser Anteil an der Gesamtimpedanz bestimmen. Die Betrachtung der Amplitude der Ausgangsspannung beziehungsweise des Verhältnisses der Amplitude der Ausgangsspannung zur Amplitude der Testspannung reicht nicht aus, da die Amplitude vom Scheinwiderstand der komplexen Gesamtimpedanz abhängig ist und nicht nur von dem Realteil, d.h. dem Teil, der keine Phasenverschiebung verursacht beziehungsweise frequenzunabhängig ist.

Bevorzugterweise ist die Vorimpedanz als Kapazität ausgebildet. Die Vorimpedanz sollte eine Größenordnung besitzen, die zumindest annähernd gleich der Größenordnung des ohmschen Innenwiderstandes der Meßkette ist. Bei einer Glaselektrode, die z.B. zur pH-Messung verwendet wird, kann der ohmsche Widerstand durchaus Größenordnungen von einigen hundert bis einigen tausend Megaohm annehmen. Der Scheinwiderstand einer Kapazität ist proportional zu ihrem Kehrwert, so daß man bei Verwendung einer relativ kleinen Kapazität einen sehr großen Scheinwiderstand der komplexen Vorimpedanz erzielen kann.

Wenn die beiden Abschnitte des Spannungsteilers etwa die gleiche Größenordnung haben, läßt sich eine gute Auflösung erzielen, so daß der ohmsche Innenwiderstand der Meßkette mit ausreichender Genauigkeit bestimmt werden kann.

Mit Vorteil ist der Knotenpunkt mit einem Tiefpaßfilter verbunden und ein Differenzverstärker ist vorgesehen, dessen einer Eingang mit dem Knotenpunkt und dessen anderer Eingang mit dem Ausgang des Tiefpaßfilters verbunden ist. Der Tiefpaßfilter hat eine Grenzfrequenz, die so ausgelegt ist, daß sie die Frequenz der Testspannung sperrt. Das eigentliche Meßsignal der Meßkette, das sich zeitlich wesentlich langsamer ändert, wird hingegen durchgelassen. Am Ausgang des Tiefpaßfilters steht also das Meßsignal permanent zur Verfügung. Dieses Meßsignal wird von dem Ausgangssignal im Differenzverstärker subtrahiert, so daß am Ausgang des Differenzverstärkers ein Signal ansteht, das nur noch die Informationen enthält, die notwendig sind, um den Innenwiderstand der Meßkette zu bestimmen.

Bevorzugterweise weisen die Auswertemittel eine Synchrongleichrichtereinrichtung auf. Mit Hilfe der Synchrongleichrichtereinrichtung läßt sich eine phasenempfindliche Gleichrichtung bewirken. Mit einer derartigen phasenempfindlichen Gleichrichtung läßt sich, je nach Ansteuerung, entweder das Ausgangssignal in zwei Komponenten zerlegen, aus denen die Phasenlage berechnet werden kann, oder man kann die Beträge einzelner Frequenzanteile des Ausgangssignals ermitteln.

Hierbei ist bevorzugt, daß an Ausgängen der Synchrongleichrichtereinrichtung zweite Tiefpaßfilter angeordnet sind. Diese Tiefpaßfilter eliminieren die durch die Synchrongleichrichtung verursachten Wechselspannungsanteile.

Um eine Zerlegung des Ausgangssignals in Realteil und Imaginärteil zu erhalten, ist bevorzugt, daß die Synchrongleichrichtereinrichtung mit der Testspannung und einer um 90° elektrisch dazu verschobenen Spannung synchronisiert ist und zwei Ausgänge aufweist, wobei der eine Ausgang den Realteil und der andere Ausgang den Imaginärteil der Ausgangsspannung ausgibt. Realteil und Imaginärteil sind aus der Darstellung von Spannungen und Strömen in der komplexen Zahlenebene bekannte Größen. Wenn der Realteil und der Imaginärteil betragsmäßig bekannt sind, läßt sich nicht nur die Phasenlage der Ausgangsspannung in Bezug auf die Testspannung genau ermitteln. Aus dem Realteil und dem Imaginärteil läßt sich beispielsweise mit Hilfe der oben angegebenen Formel auch der Anteil der komplexen Impedanz der Gesamtimpedanz bestimmen, der nichts zur Phasendrehung beiträgt. Dieser Anteil ist aber mit dem ohmschen Innenwiderstand der Meßkette weitgehend identisch.

In einer weiteren bevorzugten Ausführungsform sind zwei Synchrongleichrichtereinrichtungen vorgesehen, die mit zwei Steuerspannungen synchronisiert sind, wobei die Steuerspannungen unterschiedliche Frequenzen aufweisen, die zur Frequenz der Testspannung jeweils in einem ganzzahligen, ungeradzahligen Verhältnis stehen. Auch bei dieser Ausführungsform werden die Synchrongleichrichtungen mit der Testspannung synchronisiert. Die Synchrongleichrichtereinrichtungen liefern an ihrem Ausgang im wesentlichen die Spektralkomponente der Ausgangsspannung mit den Frequenzen der Steuerspannungen. Höherfrequente Anteile, die bei den Synchrongleichrichtungen nicht herausgefiltert werden, sind hier vernachlässigkbar und haben keinen nennenswerten Einfluß auf die Genauigkeit. Wenn die Oberwellenanteile der Testspannung bekannt sind, wie dies beispielsweise bei einer Rechteck-, Sägezahn- oder Dreieckspannung der Fall ist, läßt sich aus dem Verhältnis der Amplitude der Grundwelle und einer oder mehrerer Oberwellen oder nur mehrerer Oberwellen ein Anteil der Gesamtimpedanz ermitteln, der nicht frequenzabhängig ist. Die Gesamtimpedanz hat zwei Unbekannte, nämlich einmal eine frequenzabhängigen Widerstand und zum anderen einen frequenzunabhängigen Widerstand. Wenn die Frequenzen und die dazugehörigen Amplitudenverhältnisse bekannt sind, läßt sich beispielsweise für zwei Frequenzen ein Gleichungssystem mit zwei Gleichungen und zwei Unbekannten aufstellen, aus dem der frequenzunabhängige Anteil der Gesamtimpedanz bestimmt werden kann.

Vorteilhafterweise weist die Meßkette eine Meß-, eine Bezugs- und eine Hilfselektrode auf, wobei jeweils eine Auswerteeinrichtung für Meß- und Bezugselektrode vorgesehen ist. Die Testspannungen beider Auswerteeinrichtungen ändern sich zeitlich unterschiedlich. Eine Hilfselektrode ist in der Regel ohnehin bei einer derartigen Meßkette vorhanden. Sie wird beispielsweise zur Potentialegalisierung verwendet. Dadurch, daß Meß- und Bezugselektrode getrennt überwacht werden, lassen sich Fehler sowohl in der Meß- als auch in der Bezugselektrode sofort feststellen. Die Ausgabe falscher Meßergebnisse wird dadurch zuverlässig verhindert.

Bevorzugterweise haben die beiden Testspannungen verschiedene Frequenzen, die zueinander in einem geradzahligen Verhältnis stehen. In diesem Fall wird jede Testspannung in der Auswerteschaltung der jeweils anderen Elektrode unterdrückt.

Die Erfindung wird im folgenden anhand von bevorzugten Ausführungsbeispielen in Verbindung mit der Zeichnung beschrieben. Darin zeigen:

Fig. 1    eine schematische Darstellung einer Meßkette mit Auswerteeinrichtung,
Fig. 2    schematisch den inneren Aufbau einer Auswerteeinrichtung,
Fig. 3    eine schematische Darstellung einer Synchrongleichrichtereinrichtung,
Fig. 4    eine weitere Ausführungsform der Erfindung und

Fig. 5    eine Ausführungsform der Erfindung mit drei Elektroden.

Die Erfindung wird anhand einer pH-Meßanordnung 1 erläutert. Eine derartige Meßanordnung weist als Meßelektrode eine Glaselektrode 2 und eine Bezugselektrode 3 auf. Bei anderen ionen- oder redoxpotential-sensitiven Meßanordnungen müssen entsprechende Elektroden verwendet werden.

Die Glaselektrode 2 und die Bezugselektrode 3 sind in eine in einem Gefäß 7 befindiche Flüssigkeit 8 eingetaucht, deren pH-Wert bestimmt werden soll. Zu diesem Zweck sind die Glaselektrode 2 und die Bezugselektrode 3 über ein als Leitungsverbindung dienendes Kabel 4 mit einer Auswerteeinrichtung 5 verbunden. Die Auswerteeinrichtung 5 ermittelt aus dem Potentialunterschied zwischen der Glaselektrode 2 und der Bezugselektrode 3 eine dem pH-Wert der Flüssigkeit 8 proportionale Spannung, die an einer Anzeige 6 angezeigt wird, die mit der Auswerteeinrichtung über eine Anzeigeleitung 9 verbunden ist.

Die Glaselektrode 2 ist sehr hochohmig. Ihr Widerstand wird durch einen Ersatzwiderstand $R_G$ dargestellt. Der Widerstand $R_G$ ist selbstverständlich kein diskretes Bauteil. Er ist hier lediglich zu Anschauungszwecken dargestellt, um die weitere Betrachtung zu erleichtern. Eine Veränderung der Glaselektrode 2, beispielsweise durch eine mechanische Beschädigung, ändert den Widerstandswert des Ersatzwiderstandes $R_G$, So daß durch eine Messung dieses Ersatzwiderstandes $R_G$ auch eine Aussage darüber möglich ist, ob die Glaselektrode 2 ordnungsgemäß arbeitet oder nicht. So kann sich beispielsweise bei einem Bruch der Glaselektrode 2 der Widerstandswert des Ersatzwiderstandes $R_G$ wesentlich vergrößern.

Die Messung des Ersatzwiderstandes $R_G$ läßt sich beispielsweise dadurch bewerkstelligen, daß eine Spannung an das Kabel 4 angelegt wird und der daraus resultierende Strom gemessen wird. Dies hat jedoch den Nachteil, daß dadurch die dem pH-Wert proportionale Spannung verfälscht werden würde. Aus diesem Grunde muß sich die Testspannung, die zur Ermittlung des Ersatzwiderstandes $R_G$ verwendet wird, zeitlich ändern, und zwar mit einem anderen Zeitverhalten als die Meßspannung, die dem pH-Wert proportional ist. Der Einspeisung einer veränderlichen Spannung steht jedoch entgegen, daß die Kapazität des Kabels 4 beträchtliche Werte annehmen kann. Bevor also überhaupt ein für die Messung des Ersatzwiderstands $R_G$ notwendiger Strom zur Glaselektrode 2 gelangen kann, muß die Kapazität des Kabels 4 vollständig aufgeladen worden sein. Dies erfordert unter Umständen lange Zeiten, in denen die Messung des pH-Wertes unterbrochen werden müßte. Wird die Kabelkapazität nicht beachtet, ergeben sich falsche Werte bei der Ermittlung des Ersatzwiderstandes, da der Scheinwiderstand eines beispielsweise 10 m langen Kabels bei den verwendeten Meßfrequenzen in derselben Größenordnung liegt wie der Ersatzwiderstand $R_G$, d.h. der Innenwiderstand der Glaselektrode 2.

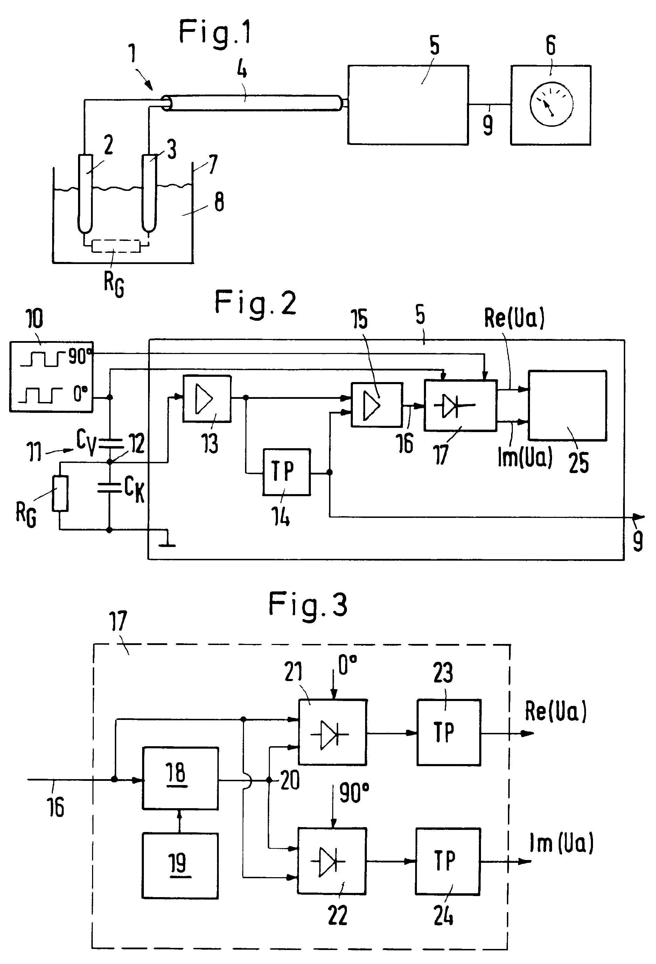

Fig. 2 zeigt den prinzipiellen Aufbau einer Schaltungsanordnung, mit der einerseits eine dem pH-Wert der Flüssigkeit 8 proportionale Meßspannung gemessen werden kann und andererseits der Wert des Innenwiderstandes, der aus Glaselektrode 2 und Bezugselektrode 3 gebildeten Meßkette, d.h. der Wert des Ersatzwiderstandes $R_G$, ermittelt werden kann.

Parallel zum Widerstand $R_G$ ist die Kabelkapazität $C_K$ angeordnet. Die Parallelschaltung aus Widerstand $R_G$ und Kabelkapazität $C_K$ bildet hier einen Teil eines Spannungsteilers 11. Der andere Teil wird durch eine komplexe Vorimpedanz $C_V$ gebildet. Die Impedanz des Spannungsteilers 11 wird durch die Impedanz der Vorimpedanz $C_V$, die Kabelkapazität $C_K$ und den Innenwiderstand $R_G$ der Meßkette bestimmt. Diese Impedanz wird im folgenden auch als Gesamtimpedanz bezeichnet.

Ein Generator 10 speist eine Rechteck-Wechselspannung in den Spannungsteiler 11 ein. Diese Spannung wird im folgenden als Testspannung $U_e$ bezeichnet. Am Knotenpunkt 12 des Spannungsteilers 11 zwischen der Vorimpedanz $C_V$ und der Parallelschaltung aus Innenwiderstand $R_G$ und Kabelkapazität $C_K$ wird eine Ausgangsspannung $U_a$ abgenommen. Die Ausgangsspannung $U_a$ wird einem Eingangsverstärker zugeführt, der beispielsweise als Impedanzwandler geschaltet sein kann und einen hohen Eingangswiderstand gewährleistet. Der Ausgang des Eingangsverstärkers 13 ist einerseits mit einem ersten Tiefpaßfilter 14 und andererseits mit einem Eingang eines Differenzverstärkers 15 verbunden. Der Ausgang des ersten Tiefpaßfilters 14 ist mit dem anderen Eingang des Differenzverstärkers 15 verbunden. Der erste Tiefpaßfilter 14 hat eine Abschneidefrequenz, die kleiner ist als die Frequenz des Generators 10. Am Ausgang des ersten Tiefpaßfilters 14 steht dann also die Meßspannung zur Verfügung, also die dem pH-Wert der Flüssigkeit 8 proportionale Spannung. Diese kann in üblicher Weise über die Anzeigeleitung 9 zur Anzeige gebracht werden. Am Ausgang des Differenzverstärkers 15, der die Differenz zwischen dem Ausgangssignal und dem Meßsignal bildet, steht dann eine Spannung zur Verfügung, die nur noch die Antwort des Spannungsteilers 11 auf die vom Generator 10 erzeugte Testspannung darstellt. Diese Spannung wird im folgenden als Antwortspannung bezeichnet. Der Ausgang des Differenzverstärkers 15 ist über eine Leitung 16 mit einer Synchrongleichrichtereinrichtung 17 verbunden.

Die Synchrongleichrichtereinrichtung 17 ist in Fig. 3 näher dargestellt. Die Leitung 16 ist mit einem Inverter 18 verbunden, der über einen automatischen Offset-Abgleich 19 verfügt. Am Ausgang des Inverters 18, d.h. am Punkt 20, steht somit eine um 180° elektrisch phasenverschobene Antwortspannung zur Verfügung. Die invertierte Antwortspannung und die nichtinvertierte Antwortspannung werden jeweils einem Synchrongleichrichter 21 und einem Synchrongleichrichter 22 zugeführt. Der Synchrongleichrichter 21 ist in bezug auf die Testspannung $U_e$ synchronisiert. Der Synchrongleichrichter 22 ist in bezug auf eine gegenüber der Testspannung um 90° elektrisch verschobene Spannung sychronisiert. Am Ausgang der Synchrongleichrichter 21, 22 sind zweite Tiefpaßfilter 23, 24 angeordnet. Die Abschneidefrequenz dieser beiden Tiefpaßfilter 23, 24 ist so gewählt, daß die durch die Synchrongleichrichtung erzeugten Oberwellen vollständig unterdrückt werden. Am Ausgang des zweiten Tiefpaßfilters 23 steht nun der Realteil der Ausgangsspannung Re $(U_a)$ zur Verfügung, am Ausgang des zweiten Tiefpaßfilters 24 steht der Imaginärteil der Ausgangsspannung Im $(U_a)$ zur Verfügung. Genauer gesagt handelt es sich hierbei um Realteil und Imaginärteil der Antwortspannung. Realteil und Imaginärteil der Antwortspannung werden einer Recheneinrichtung 25 zugeführt, die aus dem Realteil und dem Imaginärteil den Anteil der Gesamtimpedanz berechnet, der keine Phasenverschiebung des Testsignals verursacht. Beispielsweise kann hierzu folgende Formel verwendet werden:

$$R_G = k \cdot Im(U_a) \left( \frac{(Re(U_a))^2}{(Im(U_a))^2} + 1 \right)$$

mit k = 1/(Ue . $Z_V$), wobei $U_e$ der Betrag der Testspannung und $Z_V$ die (frequenzabhängige) Impedanz des Vorwiderstandes $C_V$ ist. Bei dieser Ausführungsform wird also aus der Ausgangsspannung der Realteil und der Imaginärteil ermittelt. Mit dieser Information über die Phasenlage zwischen Ausgangsspannung und Testspannung und natürlich mit der Information über die Beträge der jeweiligen Phasenanteile läßt sich eine Aussage über die Größe des Ersatzwiderstandes $R_G$ und damit über den Innenwiderstand der Meßkette treffen. Die Recheneinrichtung 25 kann diesen Wert in üblicher Weise anzeigen oder bei Über- oder Unterschreiten eines vorbestimmten Wertebereichs einen Alarm auslösen.

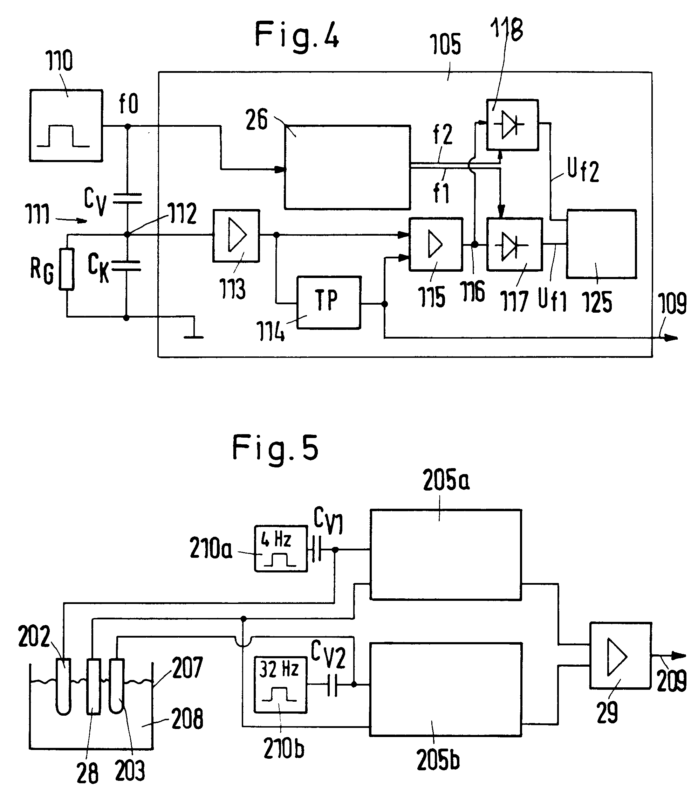

Fig. 4 zeigt eine weitere Ausführungsform, bei der das Verhalten der Ausgangsspannung nicht im Phasenbereich, sondern im Frequenzbereich untersucht wird. Teile, die denen der Fig. 2 entsprechen, sind mit um 100 erhöhten Bezugszeichen versehen. Die Symbole für die elektrischen Ersatzgrößen der Meßkette und des Kabels beziehungsweise der Vorimpedanz wurden beibehalten. Der Generator 110 liefert ebenfalls eine Rechteck-Wechselspannung. Eine derartige Rechteck-Wechselspannung läßt sich nach Fourier in eine Summe aus Grundwelle f0 und Oberwellen f1, f2 zerlegen. Mit anderen Worten ist das Spektrum der Rechteck-Wechselspannung bekannt. Aus der aus der Ausgangsspannung 112 gewonnenen Antwortspannung, die an der Leitung 116 zur Verfügung steht, läßt sich mit Hilfe von zwei Synchrongleichrichtereinrichtungen 117, 118 nun die Amplitude einzelner Spektralanteile der Antwortspannung gewinnen. Hierzu sind die Synchrongleichrichtereinrichtungen mit einem Steuersignalgenerator 26 verbunden. Der Steuersignalgenerator 26 kann beispielsweise einen Frequenzvervielfacher aufweisen, der aus der Frequenz der Grundwelle f0 höhere Frequenzen erzeugt, die nun mit der Grundwelle phasenkorreliert sind. Der Steuersignalgenerator 26 erzeugt eine Steuerspannung mit einer Frequenz f1 und eine Steuerspannung mit einer Frequenz f2. Die Steuerspannungen sind zu den Oberwellen der Testspannung synchron, und zwar nach Frequenz und Phase. Am Ausgang der Synchrongleichrichtereinrichtung 117 stehen dann die Spektralanteile $U_{f1}$ und $U_{f2}$ der Antwortspannung mit der Frequenz f1 und der Frequenz f2 zur Verfügung. Diese werden in der Recheneinrichtung 125 verrechnet. Beispielsweise läßt sich hierbei ein Gleichungssystem mit zwei Gleichungen und zwei Unbekannten aufstellen, wobei die beiden Unbekannten der frequenzabhängige und der frequenzunabhängige Anteil der Gesamtimpedanz ist. Die rechten Seiten des Gleichungssystems ergeben sich durch die Verhältnisse der Amplituden der einzelnen Spektralanteile der Ausgangsspannung und der Testspannung. Der frequenzunabhängige Anteil entspricht dem Innenwiderstand der Meßkette, d.h. dem Ersatzwiderstand $R_G$.

Bisher wurden die Betrachtungen auf eine Anordnung beschränkt, bei der lediglich zwei Elektroden, nämlich die Glaselektrode 2 und die Bezugselektrode 3, vorhanden sind. Hierbei kann eine Aussage über den Innenwiderstand der Glaselektrode 2 getroffen werden, da dieser wesentlich größer ist als der Innenwiderstand der Bezugselektrode 3.

Fig. 5 zeigt ein weiteres Ausführungsbeispiel, bei dem drei Elektroden vorgesehen sind. Teile, die denen der Fig. 1 bis 3 entsprechen, sind mit um 200 erhöhten Bezugszeichen versehen. In die Flüssigkeit 208 ist neben der Glaselektrode 202 und der Bezugselektrode 203 auch noch eine Hilfselektrode 28 eingetaucht. Ferner sind zwei Auswerteeinrichtungen 205a, 205b vorgesehen, die jeweils von einem anderen Generator 210a, 210b mit einer Testspannung versorgt werden. Hierbei arbeitet der Generator 210b mit einer um ein geradzahliges Vielfaches höheren Frequenz als der Generator 210a. Weiterhin hat die Vorimpedanz $C_{V2}$ eine wesentlich größere Kapazität als die Vorimpedanz $C_{V1}$. Es ist eine getrennte Überwachung von Glaselektrode 202 und Bezugselektrode 203 möglich. Überprüft wird im einen Fall der Widerstand der aus Glaselektrode 202 und Hilfselektrode 28 gebildeten Kette, im anderen Fall der aus Bezugselektrode 203 und Hilfselektrode 28 gebildeten Kette. Durch das gewählte Frequenzverhältnis der Generatoren 210a und 210b läßt sich eine ausreichend genaue Differenzierung zwischen den Ausgangssignalen in beiden Auswerteeinrichtungen 205a, 205b

EP 0 497 994 B1

gewinnen, da jeweils ein Ausgangssignal durch die phasenempfindliche Gleichrichtung in der Auswerteschaltung der jeweils anderen Elektrode unterdrückt wird. Die Auswerteeinrichtungen 205a, 205b stellen jetzt zwar nicht mehr direkt die Potentialdifferenz zwischen der Glaselektrode 202 und der Bezugselektrode 203 fest. Sie stellen jedoch eine Potentialdifferenz zwischen der Glaselektrode 202 und der Hilfselektrode 28 beziehungsweise zwischen der Bezugselektrode 203 und der Hilfselektrode 28 fest. Da beide Potentialdifferenzen auf das gleiche Potential der Hilfselektrode 28 bezogen sind, läßt sich die Potentialdifferenz zwischen der Glaselektrode 202 und der Bezugselektrode 203 durch einen Differenzverstärker 29 ermitteln. Die Anzeigeleitung 209 ist dann mit dem Ausgang des Differenzverstärkers 29 verbunden.

**Patentansprüche**

1. Verfahren zur Überwachung von ionen- oder redoxpotential-sensitiven Meßketten mit mindestens zwei Elektroden (2, 3; 202, 203, 204), die über eine Leitungsverbindung (4) mit einer Auswerteeinrichtung (5; 105; 205a, 205b) verbunden sind, bei dem als Testspannung eine sich zeitlich ändernde Spannung über eine Vorimpedanz ($C_V$; $C_{V1}$; $C_{V2}$) und die Leitungsverbindung (4) in die Meßkette eingespeist wird, wobei eine Ausgangsspannung am Knotenpunkt (12, 112) zwischen Vorimpedanz ($C_V$; $C_{V1}$, $C_{V2}$) und Leitungsverbindung (4) abgenommen wird, dadurch gekennzeichnet, daß die Vorimpedanz komplex ist und daß aus einer Beziehung zwischen Ausgangsspannung und Testspannung im Phasenbereich und/oder im Frequenzbereich ein nicht-phasenändernder beziehungsweise frequenzunabhängiger Anteil der aus Meßkette ($R_G$), Leitungsverbindung ($C_K$) und Vorimpedanz ($C_V$) gebildeten Gesamtimpedanz ermittelt wird.

2. Verfahren nach Anspruch 1, dadurch gekennzeichnet, daß die Testspannung als Wechselspannung ausgebildet ist.

3. Verfahren nach Anspruch 2, dadurch gekennzeichnet, daß die Testspannung einen definierten Oberwellengehalt aufweist.

4. Verfahren nach Anspruch 2 oder 3, dadurch gekennzeichnet, daß die Testspannung als Rechteck-Wechselspannung ausgebildet ist.

5. Verfahren nach einem der Ansprüche 1 bis 4, dadurch gekennzeichnet, daß Realteil ($Re(U_a)$) und Imaginärteil ($Im(U_a)$) der Ausgangsspannung ($U_a$) ermittelt werden und der ohmsche Anteil (R) der Gesamtimpedanz nach folgender Beziehung ermittelt wird:

$$R = k \cdot Im(U_a) \left( \frac{(Re(U_a))^2}{(Im(U_a))^2} + 1 \right)$$

mit $k = 1/(U_e \cdot Z_V)$, wobei $U_e$ der Betrag der Testspannung und $Z_V$ die Impedanz der komplexen Vorimpedanz ist.

6. Verfahren nach Anspruch 5, dadurch gekennzeichnet, daß Realteil und Imaginärteil der Ausgangsspannung durch eine phasenempfindliche Gleichrichtung ermittelt werden, die in bezug auf die Testspannung synchronisiert ist.

7. Verfahren nach einem der Ansprüche 1 bis 6, dadurch gekennzeichnet, daß die Ausgangsspannung in eine Meßspannung und eine von der Testspannung verursachte Spannung zerlegt wird.

8. Schaltungsanordnung zur Überwachung von ionen- oder redoxpotential-sensitiven Meßketten, die mindestens zwei Elektroden (2, 3; 202, 203, 204) aufweisen, mit einer Auswerteeinrichtung (5; 105; 205a, 205b), die über eine Leitungsverbindung (4) mit der Meßkette verbunden ist, und einer Testspannungsquelle (10; 110; 210a, 210b), die über eine Vorimpedanz in die Leitungsverbindung (4) eingespeist ist, dadurch gekennzeichnet, daß die Vorimpedanz ($C_V$; $C_{V1}$, $C_{V2}$) komplex ist, daß Auswertemittel (13-17; 113-117) vorgesehen sind, die die Beträge von vorbestimmten Phasenlagen in bezug zur Testspannung oder Frequenzanteilen einer am Knotenpunkt (12, 112) zwischen Vorimpedanz und Leitungsverbindung abgegriffenen Ausgangsspannung ermitteln, und daß eine Recheneinrichtung (25, 125) vorgesehen ist, die aus diesen Beträgen, den Phasenlagen beziehungsweise den Frequenzanteilen und der Testspannung einen nicht-phasenverändernden beziehungsweise frequenzunabhängigen Anteil der aus Vorimpedanz ($C_V$), Leitungsverbindung ($C_K$) und Meßkette ($R_G$) gebildeten Gesamtimpedanz errechnet.

9. Schaltungsanordnung nach Anspruch 8, dadurch gekennzeichnet, daß die Vorimpedanz ($C_V$) als Kapazität ausgebildet ist.

10. Schaltungsanordnung nach Anspruch 8 oder 9, dadurch gekennzeichnet, daß der Knotenpunkt (12, 112) mit einem Tiefpaßfilter (14, 114) verbunden ist und daß ein Differenzverstärker (15, 115) vorgesehen ist, dessen einer Eingang mit dem Knotenpunkt und dessen anderer Eingang mit dem Ausgang des Tiefpaßfilters verbunden ist.

11. Schaltungsanordnung nach einem der Ansprüche 8 bis 10, dadurch gekennzeichnet, daß die Auswertemittel eine Synchrongleichrichtereinrichtung (17, 117) aufweisen.

12. Schaltungsanordnung nach Anspruch 11, dadurch gekennzeichnet, daß an Ausgängen der Synchrongleichrichtereinrichtung (17, 117) zweite Tiefpaßfilter (23, 24) angeordnet sind.

13. Schaltungsanordnung nach Anspruch 11 oder 12, dadurch gekennzeichnet, daß die Synchrongleichrichtereinrichtung (17) mit der Testspannung und einer um 90° elektrisch dazu verschobenen Spannung synchronisiert ist und zwei Ausgänge aufweist, wobei der eine Ausgang den Realteil ($Re(U_a)$) und der andere Ausgang den Imaginärteil ($Im(U_a)$) der Ausgangsspannung ausgibt.

14. Schaltungsanordnung nach Anspruch 11 oder 12, dadurch gekennzeichnet, daß zwei Synchrongleichrichtereinrichtungen (117, 118) vorgesehen sind, die mit zwei Steuerspannungen (26; f1, f2) synchronisiert sind, wobei die Steuerspannungen unterschiedliche Frequenzen (f1, f2) aufweisen, die zur Frequenz (f0) der Testspannung jeweils in einem ganzzahligen, ungeradzahligen Verhältnis stehen.

15. Schaltungsanordnung nach einem der Ansprüche 8 bis 14, dadurch gekennzeichnet, daß die Meßkette eine Meß- (202), eine Bezugs- (203) und eine Hilfselektrode (28) aufweist und jeweils eine Auswerteeinrichtung (205a, 205b) für Meß- und Bezugselektrode (202, 203) vorgesehen ist, wobei sich die Testspannungen beider Auswerteeinrichtungen (205a, 205b) zeitlich unterschiedlich ändern.

16. Schaltungsanordnung nach Anspruch 15, dadurch gekennzeichnet, daß die beiden Testspannungen verschiedene Frequenzen haben, die zueinander in einem geradzahligen Verhältnis stehen.

## Claims

1. Method for monitoring ion or redox potential-sensitive measuring systems comprising at least two electrodes (2, 3; 202, 203, 204) which are connected via a line connection (4) to an evaluating device (5; 105; 205a, 205b), in which a voltage varying with time is fed as a test voltage into the measuring system via series impedance ($C_V$; $C_{V1}$, $C_{V2}$) and the line connection (4), an output voltage being tapped at the nodal point (12, 112) between the series impedance ($C_V$; $C_{V1}$, $C_{V2}$) and the line connection (4), characterised in that the series impedance is complex and that a non-phase-shifting or frequency-independent portion of the total impedance formed by the measuring system ($R_G$), the line connection ($C_K$) and the series impedance ($C_V$) is determined from a relationship between the output voltage and the test voltage in the phase region and/or in the frequency region.

2. Method according to claim 1, characterised in that the test voltage is an alternating voltage.

3. Method according to claim 2, characterised in that the test voltage has a defined harmonic content.

4. Method according to claim 2 or claim 3, characterised in that the test voltage is a square-wave alternating voltage.

5. Method according to one of claims 1 to 4, characterised in that the real part ($Re(U_a)$) and the imaginary part ($Im(U_a)$) of the output voltage ($U_a$) are determined and the ohmic portion (R) of the total impedance is determined in accordance with the following equation:

$$R = k \cdot Im(U_a) \left( \frac{(Re(U_a))^2}{(Im(U_a))^2} + 1 \right)$$

with $k = 1/(U_e \cdot Z_V)$, where $U_e$ is the magnitude of the test voltage and $Z_V$ is the impedance of the complex series impedance.

6. Method according to claim 5, characterised in that the real part and the imaginary part of the output voltage are determined by phase-sensitive rectification which is synchronised in relation to the test voltage.

7. Method according to one of claims 1 to 6, characterised in that the output voltage is split up into a measuring voltage and a voltage originating from the test voltage.

8. Circuit for monitoring ion or redox potential-sensitive measuring systems with at least two electrodes (2, 3; 202, 203, 204), comprising an evaluating device (5; 105; 205a, 205b) which is connected via a line connection (4) to the measuring system, and a test voltage source (10; 110; 210a, 210b) fed into the line connection (4) via series impedance, characterised in that the series impedance ($C_V$; $C_{V1}$, $C_{V2}$) is complex, that evaluating means (13-17; 113-117) are provided to determine the magnitudes of predetermined phase positions in relation to the test voltage or frequency portions of an output voltage tapped at the nodal point (12, 112) between the series impedance and the line connection, and that a computing means (25, 125) is provided to calculate a non-phase-shifting or frequency-independent portion of the total impedance formed by the series impedance ($C_V$), the line connection ($C_K$) and the measuring system ($R_G$) from these magnitudes, the phase positions or frequency portions and the test voltage.

9. Circuit according to claim 8, characterised in that the series impedance ($C_V$) is in the form of capacitance.

10. Circuit according to claim 8 or claim 9, characterised in that the nodal point (12, 112) is connected to a lowpass filter (14, 114) and that a differential amplifier (15, 115) is provided, one input of which is connected to the nodal point and the other input of which is connected to the output of the lowpass filter.

11. Circuit according to one of claims 8 to 10, characterised in that the evaluating means have a synchronous rectifier (17, 117).

12. Circuit according to claim 11, characterised in that second lowpass filters (23, 24) are arranged at outputs of the synchronous rectifier (17, 117).

13. Circuit according to claim 11 or claim 12, characterised in that the synchronous rectifier (17) is synchronised with the test voltage and a voltage in quadrature in relation thereto and has two outputs, one output giving the real part ($Re(U_a)$) and the other output giving the imaginary part ($Im(U_a)$) of the output voltage.

14. Circuit according to claim 11 or claim 12, characterised in that two synchronous rectifiers (117, 118) are provided and are synchronised with two control voltages (26; f1, f2), the control voltages having different frequencies (f1, f2), each bearing an integral, odd-numbered ratio to the frequency (f0) of the test voltage.

15. Circuit according to one of claims 8 to 14, characterised in that the measuring system has a measuring electrode (202), a reference electrode (203) and an auxiliary electrode (28) and respective evaluating devices (205a, 205b) are provided for the measuring electrode and the reference electrode (202, 203), the test voltages of the two evaluating devices (205a, 205b) varying differently with time.

16. Circuit according to claim 15, characterised in that the two test voltages have different frequencies bearing an odd-numbered ratio to one another.

## Revendications

1. Procédé pour la surveillance de chaînes de mesure sensibles aux ions ou de potentiel d'oxydoréduction avec au moins deux électrodes (2, 3; 202, 203, 204) qui sont raccordées par une liaison (4) à un système d'évaluation (5; 105; 205a, 205b), dans lequel on alimente en tant que tension d'essai une tension variable dans le temps par une préimpédance ($C_V$; $CV_1$; $CV_2$) et la liaison (4) dans la chaîne de mesure, une tension de sortie étant prélevée au point nodal (12, 112) entre la préimpédance ($C_V$; $C_{V1}$; $C_{V2}$) et la liaison (4), caractérisé en ce que la préimpédance est complexe et en ce qu'à partir d'un rapport entre la tension de sortie et la tension d'essai, dans la zone de phase et/ou dans la zone de fréquence, on détermine une proportion de phase invariable ou indépendante de la fréquence de l'impédance totale formée à partir de la chaîne de mesure ($R_G$) de la liaison ($C_K$) et de la préimpédance ($C_V$).

2. Procédé selon la revendication 1, caractérisé en ce que la tension d'essai est conçue comme tension alternative.

3. Procédé selon la revendication 2, caractérisé en ce que la tension d'essai présente un contenu défini d'ondes supérieures.

4. Procédé selon la revendication 2 ou 3, caractérisé en ce que la tension d'essai est conçue comme tension alternative rectangulaire.

5. Procédé selon l'une des revendications 1 à 4, caractérisé en ce que l'on détermine la partie réelle ($Re(U_a)$) et la partie imaginaire ($Im(U_a)$) de la tension de sortie ($U_a$) et en ce que l'on détermine la proportion ohmique ($R$) de l'impédance totale selon le rapport suivant:

$$R \ = \ k \, . \, Im(U_a) \, (\frac{(Re(U_a))^2}{(Im(U_a))^2} \ + \ 1)$$

avec $k = 1/(U_{e-z}V)$, moyennant quoi $U_e$ est la somme de la tension d'essai et $Z_V$ l'impédance de la préimpédance complexe.

6. Procédé selon la revendication 5, caractérisé en ce que l'on détermine la partie réelle et la partie imaginaire de la tension de sortie par un redressement sensible à la phase qui est synchronisé par rapport à la tension d'essai.

7. Procédé selon l'une des revendications 1 à 6, caractérisé en ce que l'on décompose la tension de sortie en une tension de mesure et en une tension provoquée par la tension d'essai.

8. Circuit pour la surveillance de chaînes de mesure sensibles aux ions ou de potentiel d'oxydoréduction qui comporte au moins deux électrodes (2, 3; 202, 203, 204), avec un système d'évaluation (5; 105; 205a, 205b) qui est raccordé par une liaison (4) à la chaîne de mesure, et une source de tension d'essai (10; 110; 210a, 210b) qui est alimentée par une préimpédance dans la liaison (4), caractérisé en ce que la préimpédance ($C_V$; $C_{V1}$; $C_{V2}$) est complexe, en ce qu'il est prévu des moyens d'évaluation (13-17; 113-117) qui déterminent les sommes de positions de phase prédéterminées par rapport à la tension d'essai ou aux proportions de fréquence d'une tension de sortie saisie au niveau du point nodal (12, 112) entre la préimpédance et la liaison, et en ce qu'il est prévu un système de calcul (25, 125), lequel, à partir de ces sommes, des positions de phase ou des parties de fréquence et de la tension d'essai, calcule une proportion invariable de phase ou indépendante de la fréquence de l'impédance totale formée par la préimpédance ($C_V$), la liaison ($C_K$) et la chaîne de mesure ($R_G$).

9. Circuit selon la revendication 8, caractérisé en ce que la préimpédance ($C_V$) est conçue sous forme de capacité.

10. Circuit selon la revendication 8 ou 9, caractérisé en ce que le point nodal (12, 112) est relié à un filtre passe-bas (14, 114) et en ce qu'il est prévu un amplificateur différentiel (15, 115) dont une entrée est raccordée au point nodal et dont l'autre entrée est raccordée à la sortie du filtre passe-bas.

11. Circuit selon l'une des revendications 8 à 10, caractérisé en ce que les moyens d'évaluation comportent un système redresseur synchrone (17, 117).

12. Circuit selon la revendication 11, caractérisé en ce que des seconds filtres passe-bas (23, 24) sont disposés au niveau des sorties du redresseur de synchronisation (17, 117).

13. Circuit selon la revendication 11 ou 12, caractérisé en ce que le redresseur synchrone (17) est synchronisé avec la tension d'essai et avec une tension décalée de 90° électriquement et comporte deux sorties, une sortie émettant la partie réelle ($Re(U_a)$) et l'autre sortie émettant la partie imaginaire ($Im(U_a)$) de la tension de sortie.

14. Circuit selon la revendication 11 ou 12, caractérisé en ce qu'il est prévu deux redresseurs de synchronisation (117, 118) qui sont synchronisés avec deux tensions de commande (26; f1, f2), moyennant quoi les tensions de commande comportent des fréquences différentes (f1, f2) qui par rapport à la fréquence (f0) de la tension d'essai sont respectivement en relation de nombres entiers et de nombres impairs.

15. Circuit selon l'une des revendications 8 à 14, caractérisé en ce que la chaîne de mesure comporte une électrode de mesure (202), une électrode de référence (203), et une électrode auxiliaire (28) et un système d'évaluation (205a, 205b) respectivement prévu pour l'électrode de mesure et de référence (202, 203), moyennant quoi les tensions d'essai des deux systèmes d'évaluation (205a, 205b) se modifient de façon différentielle dans le temps.

16. Circuit selon la revendication 15, caractérisé en ce que les deux tensions d'essai ont des fréquences différentes qui sont réciproquement en rapport de nombres entiers.

Fig.1

Fig.2

Fig.3

## Fig.4

## Fig.5